# FASCICULE DE BREVET EUROPEEN

(11) **EP 3 897 159 B1**
(45) Date de publication et mention de la délivrance du brevet: **13.08.2025**
(21) Numéro de dépôt: 19832037.6
(22) Date de dépôt: 16.12.2019
(51) Int. Cl.: A01N 65/38, A01P 3/00

(54) **UTILISATION ANTIFONGIQUE DE BIOCONTRÔLE POUR PELLICULAGE DE SEMENCES**
ANTIMYKOTISCHE BIOKONTROLLVERWENDUNG FÜR FILMBESCHICHTUNG VON SAATGUT
ANTIFUNGAL BIOCONTROL USE FOR FILM-COATING SEEDS

(30) Priorité: 17.12.2018 FR 1873117
(43) Date de publication de la demande: 27.10.2021
(73) Titulaire: Foucault, Jacques, 49610 Mûrs-Erigné (FR)
(72) Inventeur: Foucault, Jacques, 49610 Mûrs-Erigné (FR)
(74) Mandataire: Jorget, Quentin
(86) Numéro de dépôt international: PCT/EP2019/085339
(87) Numéro de publication internationale: WO 2020/127040

(56) Documents cités:
- WO-A1-2015/076699
- CN-A- 106 259 525
- CN-A- 106 508 986

## Description

L'invention se rapporte au domaine du biocontrôle pour la protection des semences contre les maladies fongiques et au traitement de celles-ci par des composés d'origine naturelle.

La fusariose du blé (ou gale du blé) est une maladie affectant le blé, l'orge, l'avoine, le seigle, le triticale et les graminées. Elle est due à diverses espèces de champignons du genre *Fusarium* (*F. graminearum, F. culmorum, F. tricinctum, F. poae, F. avenaceum, F. langsethiae* ou *F. sporotrichioides*) mais aussi du genre Microdochium (*M. majus* ou *M. nivale* (autrefois appelé *Fusarium nivale*))*.*
*M. nivale* provoque une fonte des semis, qui entraîne la mort des pousses et un éclaircissage. Pour les autres espèces, un symptôme fréquent est la coloration brun foncé des noeuds inférieurs, et l'on peut aussi observer le blanchiment de tout ou partie de l'épi. Le principal problème est la production potentielle de mycotoxines dans les grains (en particulier par *F. graminearum*), substances toxiques dont la concentration dans les grains, la farine et les produits à base de farine destinés à l'alimentation humaine et animale doit être inférieure aux valeurs fixées par la réglementation. La fusariose est également une maladie problématique chez le maïs.

La carie commune du blé est une maladie provoquée essentiellement en France par le champignon *Tilletia caries,* mais aussi éventuellement par *Tilletia foetida.* Les grains malades prennent une couleur foncée, deviennent gonflés, car constitués essentiellement de spores. À la récolte au moment du battage, les grains s'écrasent facilement, libérant une odeur désagréable. Les spores contenues dans les grains cariés se dispersent et contaminent les grains sains et le sol. Bien que l'on puisse prévenir ou traiter cette maladie par les traitements de semences fongicides efficaces, elle reste néanmoins présente. De fait, la lutte contre cette maladie, préventive ou curative, ne passe que par le traitement de semences, car il n'est pas possible de traiter les plantes une fois que la maladie est apparue en végétation.

La plupart des spécialités chimiques efficaces vis-à-vis des fusarioses sont également homologuées et efficaces vis-à-vis de semences contaminées par des spores de carie. On peut citer Vibrance^{®} Gold (difénoconazole, fludioxonil et sedaxane, Syngenta), Redigo^{®} (prothioconazole, Bayer Agri), Rancona^{®} 15 ME (ipconazole, Aysta LifeSciences) ou Celest^{®} Power (fludioxonil et sedaxane, Syngenta).

En agriculture biologique, face à la contamination des semences, deux spécialités sont autorisées : Copseed (sulfate de cuivre tribasique, Nufarm) et le vinaigre.

Dans une logique de développement de produits d'origine naturelle, en particulier pour l'agriculture biologique, mais aussi en anticipation de la disparition de certaines solutions chimiques du marché, il apparaît important de développer de nouvelles compositions de biocontrôle capables de protéger les semences contre les maladies fongiques, et notamment les fusarioses et la carie.

L'invention se rapporte ainsi à une méthode de protection, dite de biocontrôle, comprenant une étape de pelliculage des semences afin de les protéger contre les maladies fongiques, et en particulier les fusarioses et/ou la carie, comprenant un broyat de pommes de terre, et en particulier un simple broyat de germes de pommes de terre. Ce broyat est obtenu sans aucun process de modification et sans aucune extraction. Étant entendu que tous les produits de traitements de semences obtenus par extraction utilisant des solvants se révèlent phytotoxiques, cela pose des problèmes quant à l'expression de la germination des semences dont la qualité est recherchée pour la mise en marché des semences sous certification officielle.

CN106508986A décrit la préparation d'une composition obtenue par hydrolyse enzymatique (pectinase et cellulase) à partir de pommes de terre germées à la quelle est ajoutée une extraction alcoolique de broyat de graines de Datura pour suggérer une utilisation contre des insectes contaminants (« insect pests »). Ainsi, la composition n'est pas une composition fongicide mais une composition insecticide. Il n'est toutefois pas indiqué quels peuvent être les parasites ciblés par cette composition. Le procédé décrit fait intervenir des modifications aux germes de pomme de terre, notamment par extraction alcoolique (éthanol). Toutefois, les traitements de semences ainsi obtenus ne peuvent présenter les mêmes garanties de respect des exigences de qualité des semences définies dans le cadre des certifications telles qu'elles existent en Europe.

CN106259525A utilise essentiellement du poivre, du camphre, un extrait de pointes de germes de pommes de terre et de l'huile d'Abrasin (= huile de tung utilisée pour la protection des bois). Il ne décrit aucune expérience montrant un effet antifongique de la composition de pelliculage obtenue et l'utilisation de l'huile de tung va être un obstacle pour le procédé à suivre de l'usine qui traite et ensache. Les traitements de semences huileux ne sèchent pas, l'ensachage immédiat n'est donc pas possible.

WO2015076699A1 se rapporte au domaine de la médecine et, plus particulièrement, de l'industrie chimico-pharmaceutique, et concerne une méthode de production d'une substance d'origine végétale à activité antimicrobienne, antivirale et immunostimulante, notamment vers les cellules dendritiques, par isolation d'un extrait particulier à partir de germes de pommes de terre. Ce document ne se rapporte pas au domaine du biocontrôle des cultures.

Ainsi, dans un premier aspect, l'invention se rapporte à une méthode de biocontrôle pour protéger les plantes et les graines de plantes d'attaques par des pathogènes fongiques choisi dans le groupe constitué de *Fusarium graminearum, Fusarium culmorum, Fusarium tricinctum, Fusarium poae, Fusarium avenaceum, Fusarium langsethiae, Fusarium sporotrichioides, Microdochium majus, Microdochium nivale,* dans le groupe des *Tilletia,* par exemple *Tilletia caries* et,le groupe de pathogènes du genre *Pythium* par le pelliculage des graines avec le broyat de germes de pommes de terre avant semis. Cette méthode permet en particulier d'éviter la fonte de semis. Le biocontrôle correspond aux méthodes de protection des cultures basées sur le recours à des organismes vivants ou des substances naturelles.

Le pelliculage de graines est une technique connue dans l'art et rappelée plus bas.

Dans le mode de réalisation préféré, le broyat de germes de pommes de terre est un broyat complet de germes de pommes de terre, c'est-à-dire que le broyat ne subit aucune transformation ou extraction après broyage. Dans un mode de réalisation alternatif, le broyat de germes de pommes de terre est obtenu après une étape de filtration suivant le broyage de germes de pommes de terre.

Ainsi que vu plus haut, on effectue un broyage de germes de pommes de terre.

En particulier, on préfère lorsque le germe présente une longueur comprise entre 10 et 25 cm.

Par ailleurs, on préfère lors que les pommes de terre ne soient pas exposées à la lumière pendant la germination et le développement des germes pour éviter toute lignification.

La méthode selon l'invention protège les semences contre un pathogène fongique choisi dans le groupe constitué de *Fusarium graminearum, Fusarium culmorum, Fusarium tricinctum, Fusarium poae, Fusarium avenaceum, Fusarium langsethiae, Fusarium sporotrichioides, Microdochium majus* et *Microdochium nivale* dans le groupe des *Tilletia,* par exemple *Tilletia caries* ou le groupe de pathogènes du genre *Pythium.*

En particulier, elle s'avère particulièrement adaptée contre *Fusarium graminearum, Fusarium culmorum, Microdochium nivale* et *Tilletia caries.*

Le fait que le broyat de germes de pommes de terre soit utilisable directement dans une composition enrobant des semences est inattendu, dans la mesure où la quantité estimée de principe actif présente sur la semence après pelliculage est relativement faible, mais s'avère suffisante pour exprimer de bonnes efficacités.

Le fait que le broyat de germes de pommes de terre soit utilisable directement dans une composition enrobant des semences est intéressant car ne nécessitant aucune extraction complémentaire. Par ailleurs, l'obtention naturelle par simple broyat respecte les qualités germinatives des semences à enrober pour en permettre la certification.

Dans un mode de réalisation préféré, on utilise entre 0,5 et 3 kg, de préférence entre 1 et 2,5 kg, de façon plus préférée entre 1,5 et 2 kg, de façon encore plus préférée, entre 1,6 et 1,9 kg, de façon plus préférée environ 1,77 kg de broyat de germes de pommes de terre pour un quintal (1q) de semences de blé. En particulier on pourra utiliser 1,77 kg de broyat de germes de pomme de terre pour un quintal de semences de blé de PMG (poids de mille grains) 43.3g.

Dans un mode de réalisation préféré, on utilise entre 0,3 et 2 kg, de préférence entre 0,4 et 1,5 kg, de façon plus préférée entre 0,5 et 1,2 kg, de façon encore plus **préférée,** entre 0,6 et 1 kg, de façon plus préférée environ 0,7 à 1 kg de broyat de germes de pommes de terre pour 1q de semences de maïs. On peut utiliser en particulier 0,8 kg de broyat de germes de pomme de terre pour 1q de semences de maïs pour un PMG (poids de mille grains) du maïs de 294g et 0,94 pour 1 quintal de semences de maïs ayant un PMG de 371g.

Il est connu que la composition chimique des germes de pomme de terre est variable. Ainsi, les doses ci-dessus pourront varier en fonction de la variété de pomme de terre utilisée.

Le pelliculage des semences sert à une protection efficace des semences. Ainsi qu'indiqué par le Gnis Pédagogie, afin d'obtenir le niveau de protection nécessaire, il convient d'appliquer de façon homogène sur toute la surface des semences les matières actives adaptées aux pathogènes que l'on souhaite combattre. De fait, si la surface du grain n'est pas entièrement couverte par les produits, y compris dans le sillon, la protection risque d'être inefficace.

On formule un produit de traitement de semences en ajoutant la matière active à des formulants, adjuvants, agents pelliculants connus dans l'art. Ces composés n'ont pas d'effet biologique et sont utilisés notamment pour assurer une bonne tenue de la substance active sur la graine, ainsi qu'un bon recouvrement de la semence.

Ainsi, on effectue le pelliculage en mélangeant le broyat de germes de pommes de terre avec un formulant et/ou un agent pelliculant. Puis on pulvérise le mélange sur les semences, pour application sur les graines, l'homogénéisation étant ensuite réalisée généralement dans des mélangeurs statiques. En particulier, on choisit des agents adaptés pour l'utilisation pour l'Agriculture Biologique, et notamment les agents référencés « AB ».

On utilise, en tant que formulant, des solvants organiques ou de l'eau, des dispersants, des émulgateurs, des tensioactifs ou des mouillants, des colorants...

Les pelliculants sont utilisés pour appliquer un film microporeux à la surface de la semence. Ils permettent d'améliorer la couverture de la graine et l'homogénéité du recouvrement par la substance active. Ils peuvent également faciliter l'écoulement des semences dans le semoir.

Les enrobants peuvent modifier la forme, la taille et/ou le poids de la semence, ce qui permet d'améliorer la précision du semis. Le broyat de germe de pomme de terre peut être intégré à cet enrobant.

On peut effectuer un pelliculage monocouche ou répéter les étapes de pelliculage pour obtenir un pelliculage multicouche et augmenter ainsi la dose pour obtenir une dose optimale. Le pelliculage contient couramment d'autres éléments comme des traitements phytosanitaires ou des produits de biocontrôle.

Dans un mode de réalisation préféré, la plante est une graminée.

En particulier, la méthode est particulièrement adaptée pour des semences de blé.

On peut aussi appliquer la méthode sur des semences d'orge

On peut aussi appliquer la méthode sur des semences de toutes les autres céréales à paille telles que seigle, avoine, y compris les anciennes telle que l'épeautre,

Pour les trois espèces ci-dessus, la formulation est particulièrement adaptée pour protéger les semences contre les fusarioses et/ou la carie.

On peut aussi appliquer la méthode sur des semences de maïs. Dans ce cas, la formulation est particulièrement adaptée pour protéger les semences contre les fusarioses de la fonte des semis.

On peut aussi appliquer la méthode sur des semences de colza ou tournesol mais cette méthode s'applique également sur des espèces potagères cucurbitacée, solanacée, brassicacée ou astéracées.

La présente description se rapporte également à une composition pour pelliculage de graines, caractérisée en ce qu'elle comprend un broyat de germes de pommes de terre et au moins un agent pelliculant ou un formulant. Cette composition a des propriétés antifongiques et est destinée notamment à pelliculer des semences, ainsi que décrit plus haut, afin de protéger les semences contre les fusarioses, et/ou les septorioses et les caries.

L'utilisation d'une telle composition travaillée pour pelliculer des semences est aussi un objet de la présente description. Aussi, sans conséquence pour l'environnement, car naturellement obtenu, le broyat objet de la description peut être utilisé en pulvérisation directe sur des plantes en culture ou en traitement de semence.

Enfin, l'invention se rapporte à un broyat de germes de pommes de terre en tant que produit phytosanitaire dit de biocontrôle. Ce produit de biocontrôle présente des activités antifongiques. Ce broyat peut être utilisé en pelliculage ou en application par pulvérisation directe.

### FIGURES

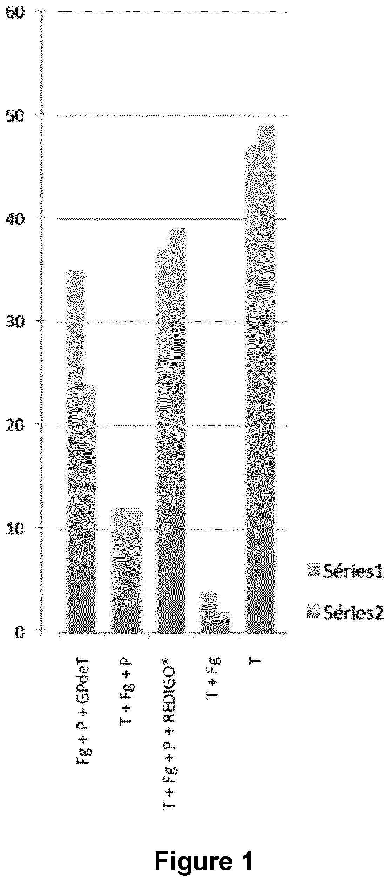

Figure 1 : Nombre de plantes levées par pathothest blé / *Fusarium graminearum ;* Series 1 et Series 2 correspondent aux 2 séries de tests. T : plantes témoin non contaminées ; T + Fg : plantes témoins, contaminées par *Fusarium graminearum ;* T + Fg + P : plantes témoin, contaminées par *Fusarium graminearum* pelliculées ; T + Fg + P + Redigo^{®} : plantes témoin, contaminées par *Fusarium graminearum* pelliculées avec du Redigo^{®} ; Fg + P + GPdeT ; plantes, contaminées par *Fusarium graminearum* pelliculées avec du broyat de germes de pomme de terre.

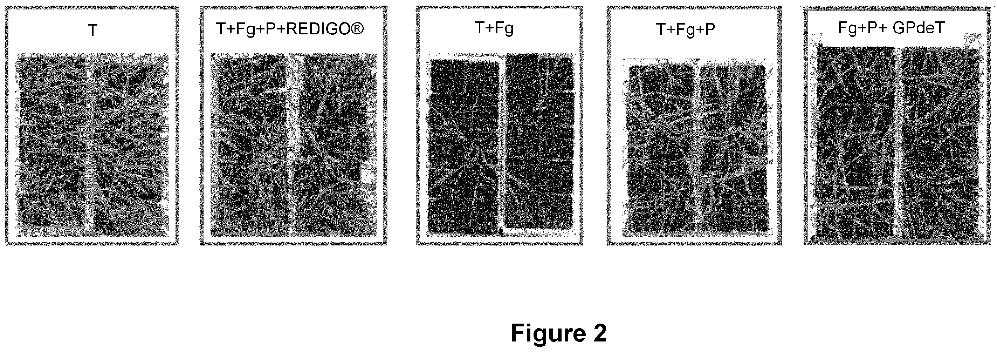

Figure 2 : photos des pathotest blé / *Fusarium graminearum,* 35 jours après semis. T : plantes témoin non contaminées ; T + Fg : plantes témoins, contaminées par *Fusarium graminearum ;* T + Fg + P : plantes témoin, contaminées par *Fusarium graminearum* pelliculées ; T + Fg + P + Redigo^{®} : plantes témoin, contaminées par *Fusarium graminearum* pelliculées avec du Redigo^{®} ; Fg + P + GPdeT ; plantes, contaminées par *Fusarium graminearum* pelliculées avec du broyat de germes de pomme de terre.

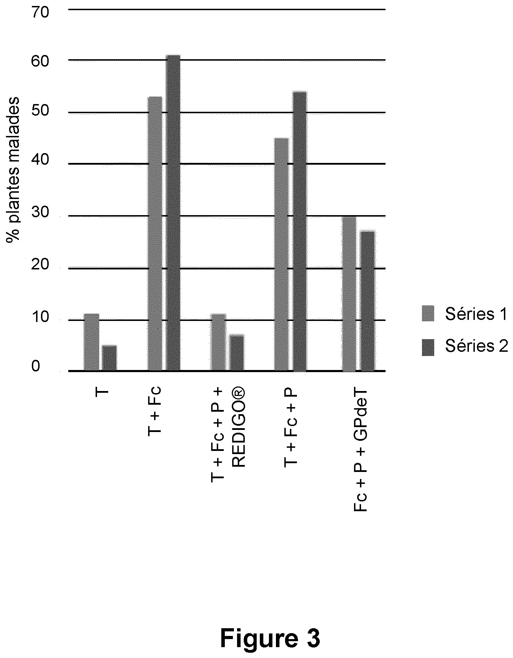

Figure 3 : test techno semences pathotest blé/ *Fusarium culmorum ;* pourcentage de plantes malades ; Series 1 et Series 2 correspondent aux 2 séries de tests. T : plantes témoin non contaminées ; T + Fc : plantes témoins, contaminées par *Fusarium culmorum ; T* + Fc + P : plantes témoin, contaminées par *Fusarium culmorum* pelliculées ; T + Fc + P + Redigo^{®} : plantes témoin, contaminées par *Fusarium culmorum* pelliculées avec du Redigo^{®} ; Fc + P + GPdeT ; plantes, contaminées par *Fusarium culmorum* pelliculées avec du broyat de germes de pomme de terre.

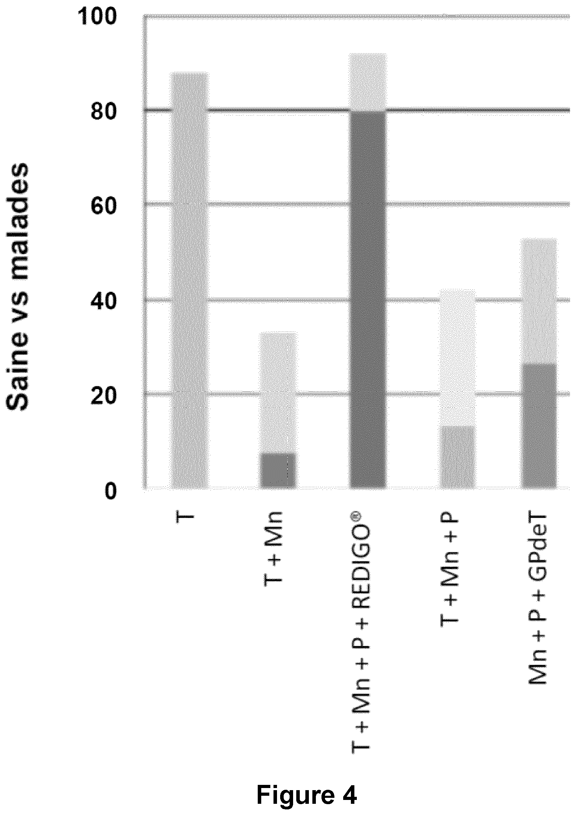

Figure 4 : test Techno semence *Microdochium nivale* / blé. L'évaluation est faite 5 à 6 semaines après semis. La partie sombre de l'histogramme (partie inférieure) correspond à la proportion de plantes saines, la partie claire à celui des plantes malades. T : plantes témoin non contaminées ; T + Mn : plantes témoins, contaminées par *Microdochium nivale ;* T + Mn + P : plantes témoin, contaminées par *Microdochium nivale* pelliculées ; T + Mn + P + Redigo^{®} : plantes témoin, contaminées par *Microdochium nivale* pelliculées avec du Redigo^{®} ; Mn + P + GPdeT ; plantes, contaminées par *Microdochium nivale* pelliculées avec du broyat de germes de pomme de terre.

### EXEMPLES

### Exemple 1. Production du broyat de germes de pomme de terre, application en traitement de semence

Le broyat a été obtenu à partir de pommes de terre de la variété Charlotte issues de la culture biologique, et dépourvues de traitement anti germinatif. Les pommes de terre ont été entreposées dans une endiverie, conservées à l'obscurité, température de 20°C, humidité 40%. Après 3 mois de culture, les germes ont été prélevés, broyés, et le jus ainsi obtenu filtré (filtre GP Millipore Express^{®} PLUS Membrane de 0.22µm) pour limiter la présence de granules d'amidon.

Pour obtenir une semence traitée, on élabore une « bouillie de traitement » composée du broyat décrit ci-dessus, d'un « pelliculant » et d'eau. Ce « pelliculant » est composé d'un adhésif de 20 à 50%, d'éléments colorants de 10 à 40% et de 10 à 40% de charges. La semence est traitée en multicouche, application de plusieurs couches successives avec un temps de séchage intermédiaire (2h). Cette application se fait dans un bol de type SATEC : la boullie incluant le broyat de germes de pomme de terre est pulvérisé sur les semences tenues en rotation dans un bol pendant quelques secondes.

### Exemple 2. Activité du broyat de germe de pomme de terre en traitement de semence blé / Pathotest Fusarium graminearum.

Le pathotest à l'encontre du fusarium a été conduit à partir de lots de semences de blé (poids de mille grains, PMG 40g) naturellement contaminées par *Fusarium graminearum* et de lots de semences témoin saines (T).

Les semences du lot contaminé ont été soit non traitées (T + Fg) soit pelliculées avec du Redigo^{®} aux doses homologuées (T + Fg + P + Redigo^{®}), soit pelliculées avec du pelliculant seul (T + Fg + P), soit du pelliculant et le broyat de germe de pomme de terre (Fg + P + GPdeT), appliqué en six couches, à la dose de 1.77 Kg par quintal.

50 graines par conditions ont été semées (5 graines/pot), conservées 5 jours en chambre froide à 10°C et ensuite en module climatique avec une phase jour de 16h (300nm) à 21°C et une phase nuit de 8h à 19°C, à 80% d'hygrométrie. Deux répétitions ont été faites (series 1 et series 2). La notation est faite autour de 35 jours après semis, elle portera sur le nombre de graines levées (figure 1) ; la figure 2 montre des photos des plantules 35 jours après semis.
La présence de pathogènes fongiques sur les graines affecte la levée des plantes, la présence de l'agent REDIGO^{®} sur ces plantes permet aux graines de lever malgré la présence de pathogènes fongiques. Un très bon résultat est également obtenu avec utilisation en pelliculage de broyat de germes de pomme de terre.

### Exemple 3. Activité du broyat de germe de pomme de terre en traitement de semence blé / Pathotest Fusarium culmorum

L'expérimentation a été réalisée sur des semences de genotype ALIXAN. Ces semences ont été pelliculées selon le protocole décrit à l'exemple 1. Les graines ont été semées selon la répartition suivante (5 graines/pot - 20 pots/condition, 2 barquettes (10 pots/barquette) ;

L'infection a été réalisée par un dépôt d'inoculum (400 ml d'une suspension de spores à 10⁶ spores/ml/grain), directement sur le substrat, au-dessus du grain semé. La souche de *Fusarium culmorum* utilisée est R96-4 ;

Après semis, les barquettes ont été placées 5 jours à 10°C pour homogénéiser la levée, puis passage à 19°C la nuit et 20°C le jour pour 16 heures de lumière (300 nm) et 80% d'hygrométrie, avec arrosage manuel.

L'analyse des symptômes a été réalisée 5 à 6 semaines post-inoculation : taux de levée et dénombrement des plantes avec symptômes au niveau du collet (% de plantes malades, figure 3) ;

Le traitement des semences par le broyat de germe de pomme de terre, protège ces semences de l'infection par *Fusarium Culmorum.*

### Exemple 4. Activité du broyat de germe de pomme de terre en traitement de semence blé / Microdochium nivale.

Le pathotest à l'encontre de *Microdochium nivale* a été conduit à partir de lots de graines naturellement contaminées et de lots de graines témoin saines (T).

Les graines du lot contaminé (Mn) ont été soit non traitées (T + Mn), soit pelliculées avec du Redigo^{®} (T + Mn + P + Redigo^{®}), soit pelliculées avec du pelliculant seul (T + Mn + P), soit pelliculées avec du pelliculant et le broyat de germes de pommes de terre (Mn + P + GPdeT).

Les semis ont été faits en terrines 25 graines par terrines et 4 terrines par modalité sur un substrat étuvé humide. Les terrines (15 x 20 x 4,5 cm) ont été placées à 5°C à l'obscurité pendant 7 jours puis à 15°C, 10h Jour, avec 80% d'humidité relative pendant 3 semaines.

Les résultats sont présentés à la figure 4. Le taux de levée pour le témoin est de 85% et l'ensemble des plantes sont saines. Pour les lots contaminés, on observe, parmi les plantes levées, une proportion de plantes saines et une proportion de plantes malades (sont considérés comme malades l'ensemble des plantes présentant un symptôme, allant des plantes ayant une simple nécrose jusqu'aux plantules mortes). L'application du broyat de germe de pommes de terre sur les graines permet de préserver ces graines de l'infection par *Microdochium nivale.*

### Exemple 5. Activité du broyat de germes de pomme de terre en traitement de semence blé, pathotest Tilletia caries;

Une Contamination artificielle sèche d'un lot de semence saine a été effectuée. Des graines de la variété RENAN indemne de carie ont été utilisées. La contamination avec la souche de *Tilletia caries* (issues de graines cariés) est faite avec à hauteur d'1 g de spore / kg de semences, avec application d'un tampon fixateur (méthode CEB n°42 p6).

Les premiers tests ont été réalisés à partir de 30 graines ; la détection de la contamination a été effectuée au stade 3 feuilles, par le protocole présenté par Orgeur et al., 31st ISTA Congress June 2016 : Transmission from seed to plant and from soil to plant of *Tilletia caries* (early detection by PCR and damage threshold).

**[Tableau 1]**

| | Nombre de plantules contaminées / nombre de plantules semées → % de contamination | |
|---|---|---|
| | *Essai 1* | *Essai* 2 |
| Témoin sain | 0 / 10 (0%) | 0 / 10 (0%) |
| Témoin contaminé | 12/30 (40%) | 15 / 30 (50%) |
| Témoin contaminé, pelliculé | 12 / 30 (40%) | 10 / 30 (33,3%) |
| Témoin contaminé, pelliculé, REDIGO | 0 / 30 (0%) | 3 / 30 (10 %) |
| Contaminé, pelliculé, broyat de germes de pomme de terre | 3 / 30 (10%) | 1 / 30 (0.33%) |

Le broyat de germes de pomme de terre a un impact sur la transmission de la carie de la semence à la plantule, son efficacité est comparable à REDIGO^{®}, protection chimique de référence du marché actuellement homologuée.

## Revendications

1. Méthode de protection d'une plante contre un pathogène fongique choisi dans le groupe constitué de *Fusarium graminearum, Fusarium culmorum, Fusarium tricinctum, Fusarium poae, Fusarium avenaceum, Fusarium langsethiae, Fusarium sporotrichioides, Microdochium majus, Microdochium nivale,* dans le groupe des *Tilletia,* par exemple *Tilletia caries* et,le groupe de pathogènes du genre *Pythium,* comprenant une étape de pelliculage des graines avec une composition comprenant un broyat de germes de pommes de terre.

2. Méthode selon la revendication 1, **caractérisé en ce que** le broyat de germes de pommes de terre est un broyat complet de germes de pommes de terre obtenu et utilisé sans modification.

3. Méthode selon la revendication 1, **caractérisé en ce que** le broyat de germes de pommes de terre est obtenu après une étape de filtration suivant broyage des germes de pommes de terre et sans aucune autre modification.

4. Méthode selon l'une des revendications 1 à 3, **caractérisée en ce que** l'on effectue le pelliculage en mélangeant le broyat de pommes de terre avec un formulant et/ou un agent pelliculant.

5. Méthode selon l'une des revendications 1 à 4, **caractérisée en ce que** l'on effectue un pelliculage monocouche ou un pelliculage multicouche.

6. Méthode selon l'une des revendications 1 à 5, **caractérisée en ce que** la plante est une graminée, préférentiellement le blé, l'orge, le seigle ou le maïs.

7. Méthode selon l'une des revendications 1 à 6, **caractérisé en ce que** l'on utilise de 0,5 à 3 Kg de broyat de germes de pommes de terre pour 1q de graines de blé.

8. Méthode selon l'une des revendications 1 à 6, **caractérisé en ce que** l'on utilise de 0.3 à 2 Kg de broyat de germes de pommes de terre pour 1q de graines de maïs.

9. Méthode selon l'une de revendications 1 à 5, **caractérisée en ce que** la plante est choisie dans le groupe constitué du colza, du tournesol et des espèces potagères cucurbitacée, solanacée, brassicacée ou astéracées.

10. Utilisation d'un broyat de germes de pommes de terre en tant que produit phytosanitaire antifongique.

## Patentansprüche

1. Verfahren zum Schutz einer Pflanze vor einem pilzlichen Krankheitserreger, ausgewählt aus der Gruppe bestehend aus *Fusarium graminearum, Fusarium culmorum, Fusarium tricinctum, Fusarium poae, Fusarium avenaceum, Fusarium langsethiae, Fusarium sporotrichioides, Microdochium majus, Microdochium nivale,* aus der Gruppe *Tilletia,* beispielsweise *Tilletia caries,* sowie aus der Gruppe von Krankheitserregern der Gattung *Pythium,* umfassend einen Schritt des Beizens der Samen mit einer Zusammensetzung, die ein Zerkleinerungsgut aus Kartoffelkeimen umfasst.

2. Verfahren nach Anspruch 1, **dadurch gekennzeichnet, dass** das Zerkleinerungsgut aus Kartoffelkeimen ein vollständiges Zerkleinerungsgut aus Kartoffelkeimen ist, das ohne Modifikation erhalten und verwendet wird.

3. Verfahren nach Anspruch 1, **dadurch gekennzeichnet, dass** das Zerkleinerungsgut aus Kartoffelkeimen nach einem Filtrationsschritt erhalten wird, der dem Zerkleinern der Kartoffelkeime folgt, und ohne weitere Modifikation verwendet wird.

4. Verfahren nach einem der Ansprüche 1 bis 3, **dadurch gekennzeichnet, dass** das Beizen durch Mischen des Zerkleinerungsguts aus Kartoffelkeimen mit einem Formulierungsmittel und/oder einem Beizmittel durchgeführt wird.

5. Verfahren nach einem der Ansprüche 1 bis 4, **dadurch gekennzeichnet, dass** ein einlagiges oder mehrlagiges Beizen durchgeführt wird.

6. Verfahren nach einem der Ansprüche 1 bis 5, **dadurch gekennzeichnet, dass** die Pflanze ein Süßgras ist, vorzugsweise Weizen, Gerste, Roggen oder Mais.

7. Verfahren nach einem der Ansprüche 1 bis 6, **dadurch gekennzeichnet, dass** 0,5 bis 3 kg des Zerkleinerungsguts aus Kartoffelkeimen pro 1 Dezitonne (dt) Weizensamen verwendet werden.

8. Verfahren nach einem der Ansprüche 1 bis 6, **dadurch gekennzeichnet, dass** 0,3 bis 2 kg des Zerkleinerungsguts aus Kartoffelkeimen pro 1 Dezitonne (dt) Maissaatgut verwendet werden.

9. Verfahren nach einem der Ansprüche 1 bis 5, **dadurch gekennzeichnet, dass** die Pflanze ausgewählt ist aus der Gruppe bestehend aus Raps, Sonnenblume sowie Gemüsearten der Familien *Cucurbitaceae, Solanaceae, Brassicaceae* oder *Asteraceae.*

10. Verwendung eines Zerkleinerungsguts aus Kartoffelkeimen als antimykotisches Pflanzenschutzmittel.

## Claims

1. Method of protecting a plant against a fungal pathogen selected from the group consisting of *Fusarium graminearum, Fusarium culmorum, Fusarium tricinctum, Fusarium poae, Fusarium avenaceum, Fusarium langsethiae, Fusarium sporotrichioides, Microdochium majus, Microdochium nivale,* in the *Tilletia* group, for example *Tilletia caries* and, the group of pathogens of the genus *Pythium* , comprising a step of coating the seeds with a composition comprising crushed potato sprouts.

2. Method according to claim 1, **characterized in that** the crushed potato sprouts are complete potato sprouts obtained and used without modification.

3. Method according to claim 1, **characterized in that** the crushed potato sprouts are obtained after a filtration step following potato sprouts grinding and without any further modification.

4. Method according to one of claims 1 to 3, **characterized in that** the film-coating is carried out by mixing the crushed potato sprouts with a formulant and/or a film-coating agent.

5. Method according to one of claims 1 to 4, **characterized in that** monolayer lamination or multilayer lamination is carried out.

6. Method according to one of claims 1 to 5, **characterized in that** the plant is a grass, preferably wheat, barley, rye or corn.

7. Method according to one of claims 1 to 6, **characterized in that** from 0.5 to 3 kg of crushed potato sprouts are used for 1q of wheat seeds.

8. Method according to one of claims 1 to 6, **characterized in that** from 0.3 to 2 Kg of crushed potato sprouts are used for 1q of corn seeds.

9. Method according to one of claims 1 to 5, **characterized in that** the plant is chosen from the group consisting of rapeseed, sunflower and the vegetable species Cucurbitaceae, Solanaceae, Brassicaceae or Asteraceae.

10. Use of a crushed potato sprouts as an antifungal plant protection product.
